# EUROPÄISCHE PATENTANMELDUNG

(11) **EP 1 956 237 A2**
(43) Veröffentlichungstag der Anmeldung: **13.08.2008**
(21) Anmeldenummer: 08151041.4
(22) Anmeldetag: 04.02.2008
(51) Int. Cl.: F03D 9/00, F03D 11/04, F03B 13/00, F03B 13/10, F03B 13/26

(54) **Offshore-Windenergie- und Tidenströmungsanlage**

(30) Priorität: 08.02.2007 DE 102007007055
(71) Anmelder: Heijmans Oevermann Verwaltungs GmbH, 48153 Muenster (DE)
(72) Erfinder: Funke, Günther, 48165, Münster (DE)
(74) Vertreter: Tarvenkorn, Oliver

(57) **Zusammenfassung**

Eine Offshore-Windenergie- und Tidenströmungsanlage (10) umfasst ein Schwerkraftfundament (11), auf dem eine Turmsäule (12) gelagert ist. In wenigstens einem Bereich auf der Oberseite des tellerförmig ausgebildeten Schwerkraftfundaments (11) ist neben der zentral angeordneten Turmsäule (12) ein Strömungskanal (21, 22) für wenigstens eine Wasserturbine (16) von wenigstens einer Tidenströmungsanlage ausgebildet.

## Beschreibung

Die Erfindung betrifft eine Offshore-Windenergie- und Tidenströmungsanlage mit einem Schwerkraftfundament, auf dem eine Turmsäule für eine Windenergieanlage gelagert ist sowie eine darauf aufgebaute Offshore-Windenergie- und Tidenströmungsanlage.

Aus der DE 201 03 421 U1 ist eine Windenergieanlage bekannt, die auf einer Turmsäule angeordnet ist, welche auf einem Schwerkraftfundament errichtet ist. Eine solche Kombination von Turmsäule und Schwerkraftfundament kann in einem Dock errichtet werden, ist aufgrund von Hohlräumen schwimmfähig und kann dann als Ganzes zum Aufstellungsort transportiert werden, wo sie durch Flutung der inneren Hohlräume abgesenkt wird. Am Aufstellort muss zumindest bei Flachfundamenten darauf geachtet werden, dass es nicht durch Unterwasserströmungen zu Unterspülungen der Fundamentplatte, sogenannten Auskolkungen, kommt. Hierzu muss der Übergangsbereich vom Meeresboden zur Fundamentplatte durch Steinschüttungen oder dergleichen befestigt werden.
Unabhängig von der Art des Fundaments besteht bei Windenergieanlagen das Problem, dass sie bei nicht ausreichenden Windgeschwindigkeiten keine Energie liefern, wobei die Stillstandszeiten zudem kaum vorhersehbar sind.

Die GB 2 365 385 A offenbart eine Anordnung, bei der eine Kombination einer Windenergieanlage und einer Tidenströmungsanlage vorgesehen ist, jedoch ist hier ein hoch über den Meeresboden aufragendes und komplex gestaltetes, kreuzförmiges Fundament vorgesehen. Die winkelförmig zueinander ausgerichteten Arme bewirken eine große Erhöhung der Strömungsgeschwindigkeit im Zentralbereich, also unmittelbar an den Kanten des Fundaments vor dem Eintritt der Wasserführungskanäle zu den Impellern. Dadurch ist die Gefahr von Auskolkungen erhöht.

Aufgabe der vorliegenden Erfindung ist es somit, eine Möglichkeit für den Windenergieanlagenbetreiber bereit zu stellen, die Ausbeute an Energie bei einer Offshore-Windenergieanlage ohne großen Mehraufwand bei der Fundamentgestaltung erhöhen zu können.

Diese Aufgabe wird gemäß der Erfindung durch eine Offshore-Windenergie- und Tidenströmungsanlage mit den Merkmalen des Anspruchs 1 gelöst, bei der die unter Wasser liegenden Flächen auf der Oberseite des Schwerkraftfundaments seitlich des Turmfußes für die Anordnung wenigstens einer Tidenströmungs-Energieanlage genutzt werden können.

Insbesondere werden beidseits des Turmfußes auf dem überkragenden Bereich der Fundamentplatte Turbinen errichtet und zwar so, dass sie in Richtung der Haupttidenströmung ausgerichtet sind. Durch die symmetrische Anordnung mit der dazwischen liegenden Turmsäule wird bereits eine Strömungsteilung und -lenkung bewirkt. In Strömungsrichtung an der Turmsäule anprallendes Wasser wird seitlich abgelenkt und auf die Impeller der Turbinen geleitet, wodurch die lokale Strömungsgeschwindigkeit an der Turbine erhöht werden kann. In an sich bekannter Weise sind die Turbinen mit Generatoren gekoppelt um elektrischen Strom zu erzeugen.

Unter einer Tidenströmungsanlage werden alle Arten von Gezeitenkraftwerken, Laufwasserkraftwerken und dergleichen verstanden, die eine starke Unterwasser-Fließströmung zur Gewinnung vorzugsweise elektrische Energie nutzen.

Der besondere Vorteil der Erfindung ergibt sich dadurch, dass die Oberseite des Schwerkraftfundaments, die aus statischen Gründen ohnehin große Abmessungen haben muss, zur Ausbildung der Unterseite eines Strömungskanals zur Verfügung steht, ohne dass gesonderte Fundamente erreichtet werden brauchen, und dass diese Fläche aus Beton besteht und damit auch starken, wechselnden Strömungen widersteht.

Die Strömungslenkung kann bei einer bevorzugten Ausführungsform der Erfindung noch dadurch verbessert werden, dass am Außenrand ein vertikales Strömungsschild angeordnet ist. Dieses ist vorzugsweise spiegelbildlich zu seitlichen Teilbereichen des Turmprofils am Turmfuß ausgebildet, so dass das außen liegende Strömungsschild und die innen angeordnete Turmsäule einen symmetrischen Strömungskanal ausbilden, in welchem die Turbine angeordnet ist.

Neben dem ohnehin bei der Erfindung gegebenen Vorteil einer zusätzlichen Energieausbeute, die über die Strömungsenergieanlage kontinuierlich beim Gezeitenwechsel erzielt werden kann und witterungsunabhängig ist, werden durch die gezielte Lenkung der Strömung im Fundamentbereich in einem künstlichen Strömungskanal weniger Turbulenzen erzeugt bzw. die Turbulenzen auf kleine Flächen konzentriert, die dann gezielt vor einer Auskolkung geschützt werden können, oder die Turbulenzen treten erst in höheren Wasserschichten auf, wo sie nicht mehr zu Auskolkungen am Fundamentrand führen können.

Möglich ist auch, das vertikale Strömungsschild über den Außenumfang des Fundaments hinausragen zu lassen, um die Strömung bereits vor der kritischen Übergangsstelle vom Meeresboden auf das Fundament gezielt zu beeinflussen.

Vorteilhaft ist hierbei auch, wenn die Turbine auf einem radial verlaufenden Buckel auf dem Fundament angeordnet ist. Durch den Buckel wird eine Aufwärtsbewegung der Strömung bewirkt, sodass höhere Strömungsgeschwindigkeiten in Wasserschichten oberhalb der Fundamentoberseite bewirkt werden, nicht aber im unmittelbaren Übergangsbereich zwischen Meeresboden und Fundamentplatte.

Die - in Strömungsrichtung gesehen - Vorder- und/oder Rückseite des Turmfußes kann einen keilförmigen Querschnitt aufweisen. Sie dient dann an der angeströmten Seite als Strömungsteiler, um die Strömung auf die vorzugsweise beidseits der Turmsäule angeordneten Strömungsenergieanlagen aufzuteilen. An der rückwärtigen Seite dient sie der gerichteten Zusammenführung der Stromfäden, um Verwirbelungen im Stromschatten der Turmsäule zu vermeiden.

Die Erfindung wird nachfolgend anhand eines Ausführungsbeispiels mit Bezug auf die Zeichnungen näher erläutert. Die Figuren zeigen jeweils eine Offshore-Windenergie- und Tidenströmungsanlage gemäß der Erfindung bzw. ein Fundament dafür und zwar in:
- Fig. 1: in einer Gesamtansicht von vorn;
- Fig. 2: in einer Ansicht des Turmfußes von vorn;
- Fig. 3: in einer perspektivischen Ansicht des Turmfußes und
- Fig. 4: in einer Ansicht von oben.

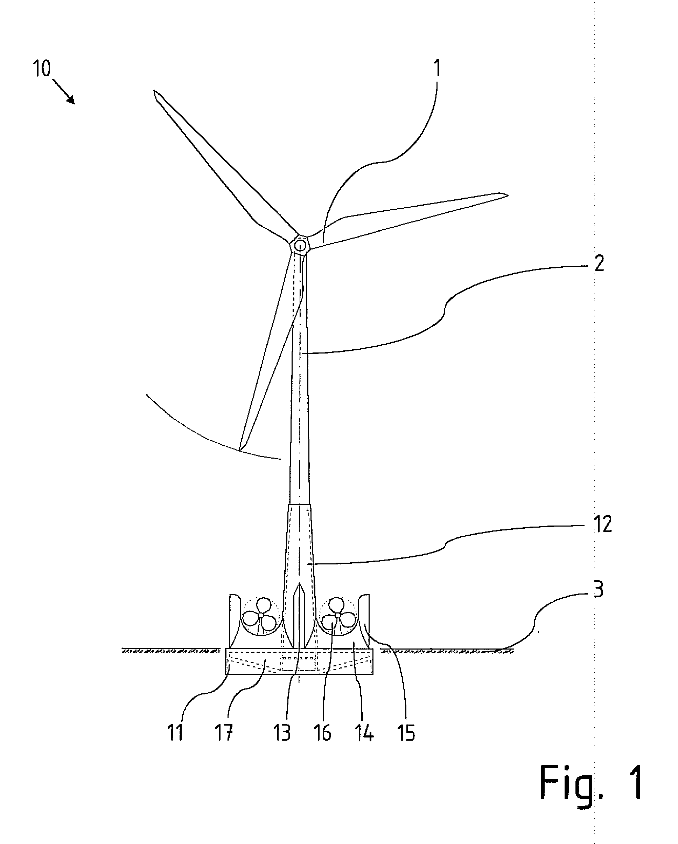

Fig. 1 zeigt eine Offshore-Windenergie- und Tidenströmungsanlage 10, die aus einem tellerförmigen Schwerkraftfundament 11 mit einer daran angeschlossenen Turmsäule 12 besteht. Auf der Turmsäule ist über einen Zusatzmast 2 eine Windenergieanlage 1 montiert.

Ein Turmfuß 13 ist an zwei gegenüberliegenden Seiten keilförmig ausgebildet, um die Strömung um die Turmsäule 12 herum zulenken und dabei Verwirbelungszonen zu vermeiden.

Beidseits der Turmsäule 12 sind Wasserturbinen 16 als Teil einer Strömungsenergieanlage auf dem Schwerkraftfundament 11 bzw. auf einem darauf angeformten Buckel 14 angeordnet.

Das Schwerkraftfundament 11 ist im dargestellten Beispiel mit inneren Hohlräumen 17 ausgebildet, so dass es schwimmend zum Aufstellort transportierbar ist und dann nach dem Absenken auf den Meeresgrund 3 geflutet oder z.B. mit Sand gefüllt werden kann.

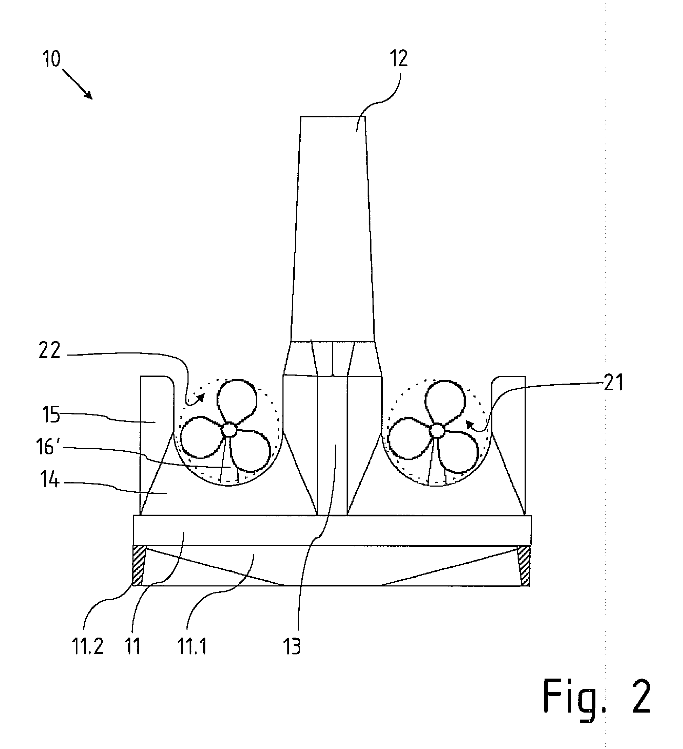

Fig. 2 zeigt von der Offshore-Windenergie- und Tidenströmungsanlage 10 nur das Fundament allein - ohne Windenergieanlage - in Ansicht von vorn.

Um Strömungskanäle 21, 22 mit einer gerichteten Strömung auszubilden, wird als Gegenstück zum Turmfuß 13 außen am Schwerkraftfundament 11 jeweils ein vertikales Strömungsschild 15 errichtet, das im dargestellten Ausführungsbeispiel bis ganz an den Rand des Schwerkraftfundamentes 11 reicht, was aber nicht zwingend erforderlich ist; es könnte auch ein Überstand verbleiben.

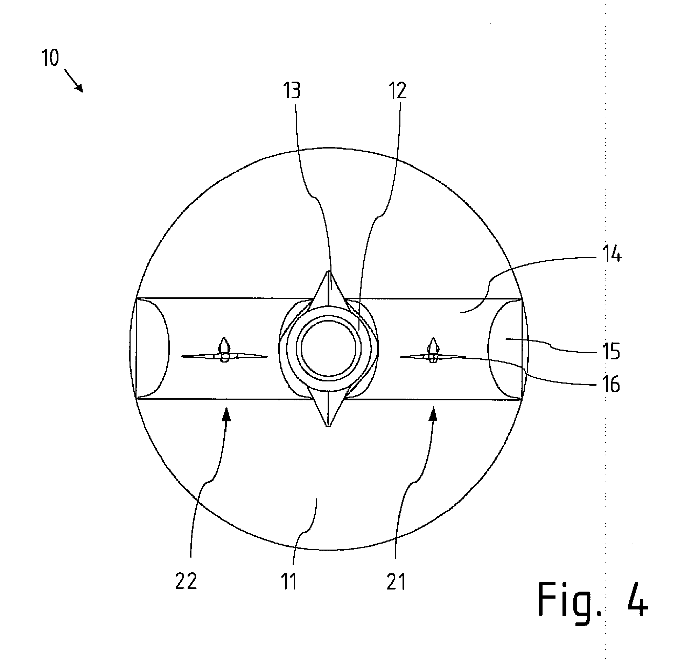

Das Strömungsschild ist, wie insbesondere auch die Draufsicht in Fig. 4 zeigt, in einem horizontalen Querschnitt gesehen derart ausgebildet, dass auf einer gedachten Linie, die sich zwischen den Wasserturbinen 16 erstreckt und durch das Zentrum des Turms 12 läuft, die geringste Weite des Strömungskanale 21, 22 vorliegt und kurz vor den Wasserturbinen 16 Ein- und Auslaufbereiche gebildet sind.

In Fig. 2 ist weiterhin erkennbar, dass die Unterseite des Schwerkraftfundaments 11 einen kegelabschnittsförmigen Teilkörper 11.1 umfasst. Diese Form ist gewählt, um das Schwerkraftfundament 11 in eine Grube am Meeresboden stellen zu können. Eine Grube mit flach abfallenden Schrägen kann unter Wasser einfacher hergestellt werden und bleibt in Ihrer Form auch besser gegen den Angriff der Strömung erhalten, bis das in einem Baudock fertig gestellte Schwerkraftfundament 11 samt Turmsäule 12 an der vorgesehenen Stelle positioniert ist, als dies bei einer zylindrischen Ausschachtung der Fall wäre.

Eine außen liegende Schürze 11.2 dient als Auskolkungsschutz und gräbt sich beim Absenken des Schwerkraftfundamentes 11 in den Meeresboden ein.

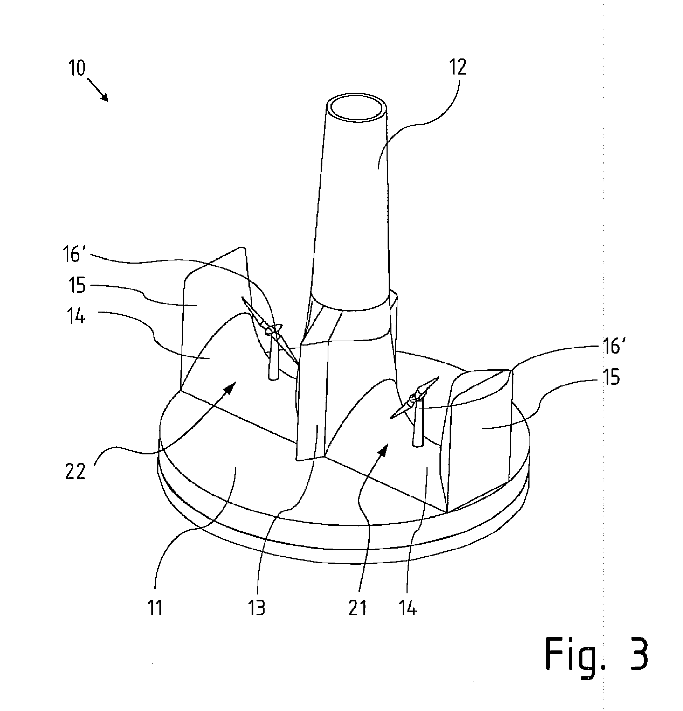

Fig. 3 zeigt das Fundament 11 in perspektivischer Ansicht. Unterschiedlich ist bei dieser Darstellung lediglich die Ausbildung der Wasserturbinen 16', die hier mit flügelartigen Impellern dargstellt sind, wohingegen in den übrigen Ansichten Impeller nach Art einer Schiffschraube gezeigt sind.

Wie Fig. 3 weiterhin deutlich zeigt, erstrecken sich Buckel 14 auf der Oberseite des Schwerkraftfundaments 11 radial vom Turmfuß 13 nach außen bis zum jeweiligen Strömungsschild 15. Dabei fällt die Höhe der Buckel 14, ausgehend jeweils von randseitig angeordneten, erhöhten Bereichen, etwa zur Mitte hin ab, wo die Wasserturbinen 16 angeordnet sind. Durch den somit gerundeten Übergang wird, wie in Fig. 2 erkennbar ist, ein halbkreisförmiger Strömungskanal. Scharfkantige Übergänge, die Verwirbelungen nach sich ziehen würden, werden somit vermieden.

Bei einem Ausführungsbeispiel sind folgende Abmessungen gegeben:

Von dem Durchmesser des Schwerkraftfundaments 11 von 40 m entfällt ca. ein Viertel gleich 10 m auf die Weite des Turmfußes 12. Die Strömungsschilde 15 springen von der Umfangslinie aus gesehen um etwa 4 m nach innen vor. Damit steht für jeden der beiden Strömungskanäle 21, 22 seitlich des Turmfußes 13 eine Strömungskanalweite von ca. 11 m zur Verfügung. Die Größe des Impellers der Turbine 16 bzw. 16' ist aus fertigungstechnischen Gründen beim heutigen Stand der Technik auf ca. 6 m bis 7 m limitiert. Sie ist aber insbesondere auch auf die Weite der Strömungskanäle 21, 22 derart abgestimmt, dass die Wasserturbinen 16 in einem zentralen Strömungsbereich liegen, in dem eine weitgehend laminare Strömung vorherrscht.

## Patentansprüche

1. Offshore-Windenergie- und Tidenströmungsanlage (10) mit einem Schwerkraftfundament (11), auf dem eine Turmsäule (12) gelagert ist,
wobei in wenigstens einem Bereich auf der Oberseite des tellerförmig ausgebildeten Schwerkraftfundaments (11) neben der zentral angeordneten Turmsäule (12) ein Strömungskanal (21, 22) für wenigstens eine Wasserturbine (16) wenigstens einer Tidenströmungsanlage ausgebildet ist.

2. Offshore-Windenergie- und Tidenströmungsanlage (10) nach Anspruch 1, **dadurch gekennzeichnet, dass** das Schwerkraftfundament (11) kreisförmig ist und zwei Wasserturbinen (16) beidseits der Turmsäule (12) angeordnet sind.

3. Offshore-Windenergie- und Tidenströmungsanlage (10) nach Anspruch 1 oder 2, **dadurch gekennzeichnet, dass** im Außenbereich des Schwerkraftfundaments (11) ein vertikales Strömungsschild (15) angeordnet ist.

4. Offshore-Windenergie- und Tidenströmungsanlage (10) nach Anspruch 3, **dadurch gekennzeichnet, dass** sich das Strömungsschild (15) in einem horizontalen Querschnitt in Strömungsrichtung gesehen bis auf Höhe der Wasserturbine (16) erweitert und anschließend verjüngt.

5. Offshore-Windenergie- und Tidenströmungsanlage (10) nach Anspruch 3 oder 4, **dadurch gekennzeichnet, dass** sich das vertikale Strömungsschild (15) bis über den Außenrand des Schwerkraftfundaments (11) erstreckt.

6. Offshore-Windenergie- und Tidenströmungsanlage (10) nach einem der vorhergehenden Ansprüche, **dadurch gekennzeichnet, dass** unterhalb der Wasserturbine (16) jeweils ein radial verlaufender Buckel (14) auf dem Schwerkraftfundament (11) ausgebildet ist.

7. Offshore-Windenergie- und Tidenströmungsanlage (10) nach einem der vorhergehenden Ansprüche, **dadurch gekennzeichnet, dass** der Buckel (14) von einem Bereich geringer Höhe, in dem die Wasserturbine (16) angeordnet ist, zum Turmfuß (13) und/oder zum Strömungsschild (15) hin ansteigt.

8. Offshore-Windenergie- und Tidenströmungsanlage (10) nach einem der vorhergehenden Ansprüche, **dadurch gekennzeichnet, dass** in Strömungsrichtung gesehen die Vorder- und/oder Rückseite des Turmfußes (13) einen keilförmigen Querschnitt aufweist.

9. Offshore-Windenergie- und Tidenströmungsanlage (10) **gekennzeichnet durch** Windenergieanlage, die auf der Turmsäule gelagert ist.

10. Offshore-Windenergie- und Tidenströmungsanlage (10) nach einem der Ansprüche 1 bis 9, **dadurch gekennzeichnet, dass** die Tidenströmungsanlage wenigstens eine Wasserturbine (16, 16') und einen damit gekoppelten elektrischen Generator umfasst.
